# EUROPEAN PATENT APPLICATION

(11) **EP 3 330 562 A1**
(43) Date of publication of application: **06.06.2018**
(21) Application number: 17201559.6
(22) Date of filing: 14.11.2017
(51) Int. Cl.: F16D 55/228, F16D 65/18, F16D 121/08, F16D 125/12, F16D 65/00, F16D 55/00

(54) **HYDRAULIC DISC BRAKE DEVICE**

(30) Priority: 16.11.2016 TW 105137343
(71) Applicant: GLORY PRECISION INDUSTRY CO., LTD., Fangyuan Township, Changhua County 528 (TW)
(72) Inventor: CHEN, Chung-Cheng, 528 Fangyuan Township, Changhua County (TW); CHEN, Chung-Yi, 528 Fangyuan Township, Changhua County (TW); CHEN, Yu-Syong, 528 Fangyuan Township, Changhua County (TW); LI, Sheng-Cian, 528 Fangyuan Township, Changhua County (TW); HUNG, He-Chih, 526 Erlin Township, Changhua County (TW)
(74) Representative: Viering, Jentschura & Partner mbB Patent- und Rechtsanwälte

(57) **Abstract**

A hydraulic disc brake device (100, 300) to be mounted on a bicycle is disclosed, wherein the device includes a caliper main body (10, 80), two brake linings (20, 70), two membranes (30, 50), and two rings (40, 60). The caliper main body (10, 80) has a channel (12) and two oil chambers (14) respectively formed on two sides of the channel (12). Each of the oil chambers (14) has an opening (141) facing the channel (12). A part of a brake disc (200) of the bicycle is located in the channel (12). The brake linings (20, 70) are provided in the channel (12), and are on two sides of the brake disc (200). The membranes (30, 50) are assembled to the caliper main body (10, 80) to seal the openings (141). By injecting hydraulic oil into the oil chambers (14), the membranes (30, 50) are pushed by the hydraulic oil to push against the brake linings (20, 70), making the brake linings (20, 70) approach each other to clamp the brake disc (200), whereby to stop the bicycle.

## Description

### BACKGROUNDOFTHE INVENTION

### 1. Technical Field

The present invention relates generally to bicycle components, and more particularly to a hydraulic disc brake device.

### 2. Description of RelatedArt

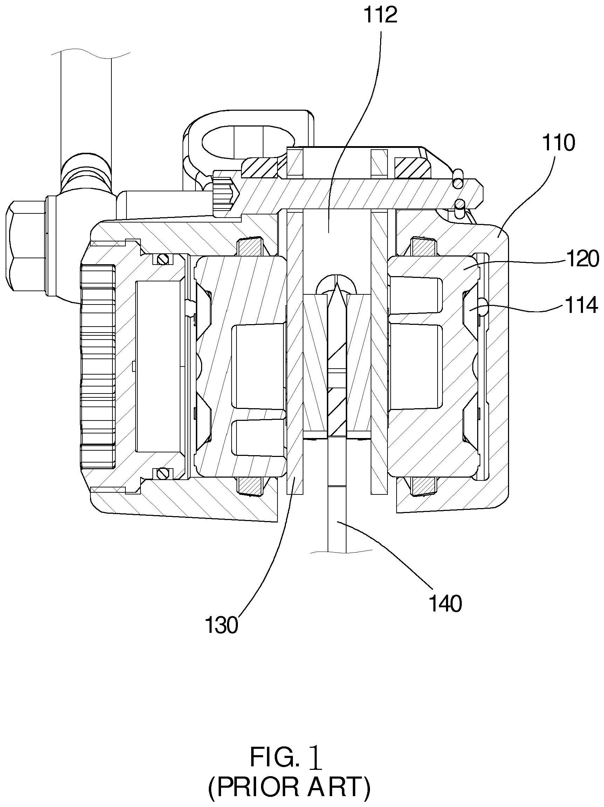

As shown in FIG. 1, a hydraulic disc brake device used in a conventional bicycle includes a caliper main body 110, two pistons 120, and two brake linings 130. The caliper main body 110 is mounted on a bicycle, and has a channel 112 and two corresponding oil grooves 114, wherein the channel 112 is provided to have a part of a brake disc 140 received therein, and each of the oil grooves 114 is provided to have the corresponding piston 120 movably engaged therein. Each of the oil grooves 114 communicates with an oil cylinder located at a lever (not shown). When a rider pulls the lever, hydraulic oi in the oil cylinder is driven to flow toward the oil grooves 114, forcing the pistons 120 to move in corresponding directions, whereby to respectively push the brake linings 130 to clamp the brake disc 140. In this way, the rim of the bicycle is stopped rotating to stop the bicycle.

However, the aforementioned kind of hydraulic disc brake device has some disadvantages, such as, it is bulky because the caliper main body 110 has to provide room to accommodate the pistons and other components; the overall structure is complex and therefore the device is not easy to install, and the manufacturing cost is high also due to that. Furthermore, there is usually a margin purposely designed between the wall of each oil groove 114 and the corresponding piston 120 to allow the piston 120 to smoothly move in the oil groove 114, but the margin may cause oil leaking when the hydraulic disc brake device is in use. After being used for a long period, the pressure inside the oil grooves 114 and the oil cylinder would be reduced, which leads to insufficient braking ability.

At least for the above reasons, the structure and the design of a conventional hydraulic disc brake device are not perfect, and still have room for improvement.

### BRIEF SUMMARY OF THE INVENTION

In view of the above, the objective of the present invention is to provide a hydraulic disc brake device, which has the characteristics of small size, oil leakage prevention, and lower manufacturing cost.

The present invention provides axhydraulic disc brake device, which includes a caliper main body, two brake linings, and two membranes. The caliper main body has a channel and two oil chambers, each of which is formed on two sides of the channel, wherein each of the oil chambers has an opening facing the channel. The brake linings are provided in the channel of the caliper main body. The membranes are assembled to the caliper main body, each of which respectively seals the opening of one of the oil chambers. Whereby, when hydraulic oil is injected into the oil chambers of the caliper main body, the membranes are pushed by the hydraulic oil to push against the corresponding brake linings, forcing the brake linings to approach each other.

With the above design, the size of the device would be small, the manufacturing cost could be lowered, and the oil leakage could be prevented.

### BRIEF DESCRIPTION OF THE SEVERAL VIEWS OF THE DRAWINGS

T he present i nventi on will be best understood by referri ng to the following detailed description of some illustrative embodiments in conjunction with the accompanying drawings, in which
FIG. 1 is a sectional view of the structure of a conventional hydraulic disc brake device;
FIG. 2 is a perspective view of a hydraulic disc brake device of a first embodiment of the present invention applied to a brake disc;
FIG. 3 is a structural exploded view of the hydraulic disc brake device shown in FIG. 2;
FIG. 4 is a perspective view of the hydraulic disc brake device of the first embodi ment of the present i nventi on;
FIG. 5 is a sectional view along the 5-5 line in FIG. 4, showing the condition when the membranes do not push against the brake linings;
FIG. 6 is similar to FIG. 5, showing the condition when the membranes push against the brake linings, maki ng the brake linings clamp the brake disc;
FIG. 7 is a sectional view of the hydraulic disc brake device of a second embodiment of the present invention, showing that the rings are fixedly provided on the cal i per main body; and
FIG. 8 is a sectional view, showing that the membranes having the iron sheet push against the brake linings.

### DETAILED DESCRIPTION OF THE INVENTION

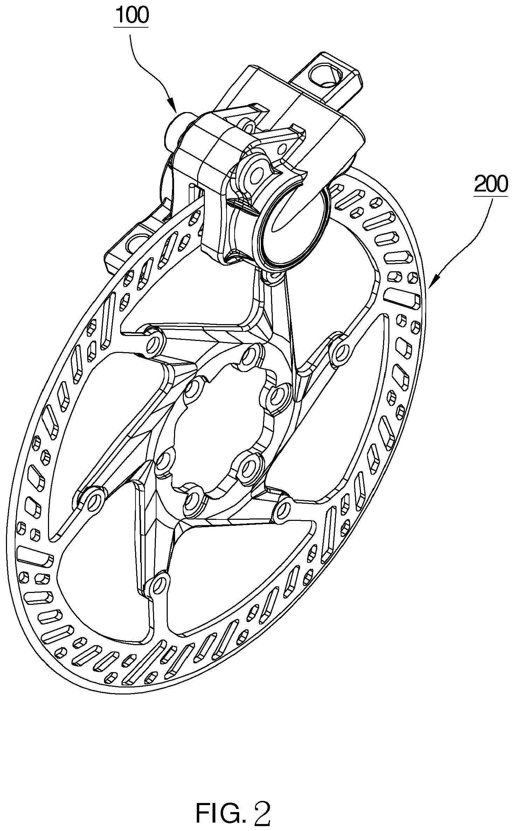

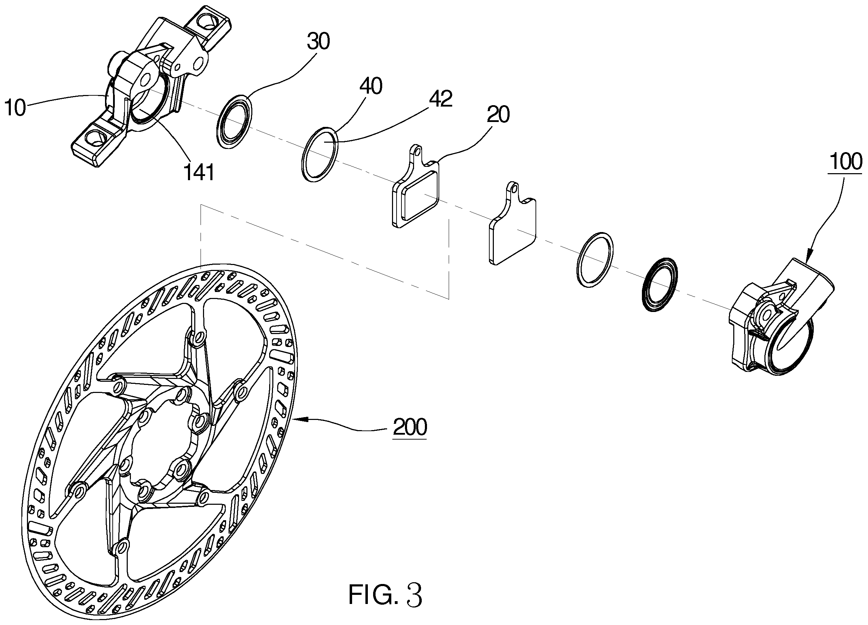

A structure for braking is shown in FIG. 2 to FIG. 6, which includes a hydraulic disc brake device 100 of an embodiment of the present invention, and a brake disc 200 matching the hydraulic disc brake device 100.

The hydraulic disc brake device 100 includes a caliper main body 10, two brake linings 20, two membranes 30, and two rings 40. The caliper main body 10 is adapted to be engaged with the front fork of a bicycle, and has a channel 12, two oil chambers 14, and two circular grooves 16, wherein the oil chambers 14 and the circular grooves 16 are both respectively formed on two sides of the channel 12. Each of the oil chambers 14 is filled with hydraulic oil, and is respectively connected to an oil cylinder (not shown) located at a lever of a bicycle through an oil tubing. Said hydraulic oil could be controlled to flow toward the corresponding oil chamber 14 or the corresponding oil cylinder. Each of the oil chambers 14 has an opening 141 facing the channel 12. In the current embodiment, the oil chambers 14 would not need to accommodate components such as pistons, and therefore the capacities thereof could be appropriately reduced, whereby to reduce the size of the caliper main body 10. Each of the circular grooves 16 is recessed into a periphery of the corresponding oil chamber 14, and communicates with the corresponding oil chamber 14. In the current embodiment, each of the circular grooves 16 is further has a recess 161 provided on a bottom thereof, wherein the recess 161 is a circular structure surrounding the corresponding oil chamber 14. However, in other embodiments, the recess could be a discontinuous structure distributed around the periphery of the corresponding oil chamber 14.

The brake disc 200 and a rim of a bicycle are adapted to be coaxially provided at the front fork (not shown) of the bicycle, wherein the brake disc 200 and the bicycle rim would be rotated synchronously in the same direction. A part of the brake disc 200 is located in the channel 12 of the caliper main body 10, and the brake disc 200 rotates relative to the caliper main body 10 along with the rotation of the bicycle rim. The brake linings 20 are disposed in the channel 12 of the caliper main body 10, and are located on two sides of the brake disc 200. Furthermore, the brake linings 20 are affected by the elasticity of an elastic member (not shown) to remain in a state that not touching the brake disc 200 in a normal condition. Said normal condition refers to the condition when the rider does not pull the lever. Since the structures of the brake disc 200 and the brake linings 20 are well-known techniques, and are not key features of the present invention, we are not goi ng to descri be the structures in details therein.

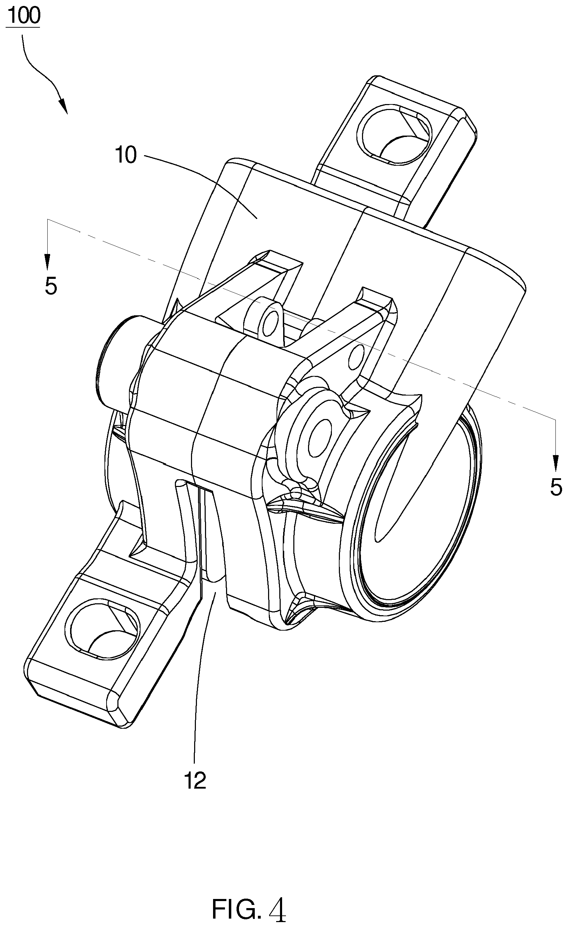

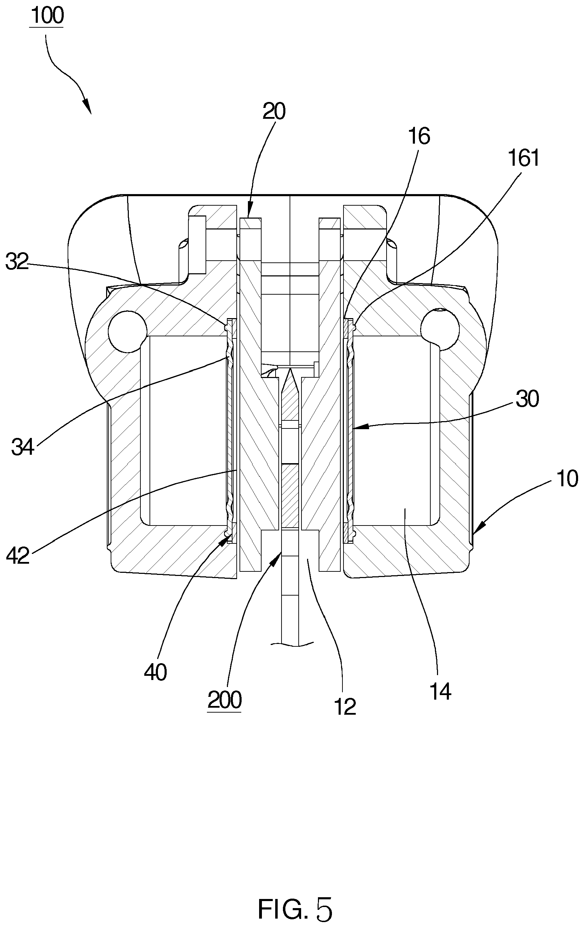

As shown in FIG. 4 and FIG. 5, each of the membranes 30 is thin and film-like, and has excellent stretchability. Each of the membranes 30 fits in the corresponding circular groove 16 of the caliper main body 10, and respectively seals the opening 141 of one of the oil chambers 14, whereby to prevent the hydraulic oil in the oil chambers 14 from leaking. In addition, each of the membranes 30 further has a protrusion 32 and a wavy segment 34 provided around a periphery thereof, wherein the protrusion 32 protrudes toward the corresponding oil chamber 14, and is closer to the periphery of the belonged membrane 30 than the wavy segment 34 is, wherein the protrusion 32 is adapted to tightly fit in the corresponding recess 161. Such design would be convenient for quick alignment between the membranes 30 and the circular grooves 16, and would further enhance the degree of sealing between the membranes 30 and the oil chambers 14 to prevent oil from leaking. Also, each of the membranes 30 could have a better stretching ability due to the wavy segment 34 provided thereon. However, in other embodiments, the wavy segment of each of the membranes could be also omitted. In addition, each of the membranes in the current embodiment is made of one single material (e.g., rubber), but it could be alternatively made of composite materials in other embodiments.

Each of the rings 40 has a hollow area 42. While assembling the components, each of the rings 40 respectively would push against the periphery of the corresponding membrane 30, so that a part of the periphery of each of the membranes 30 would abut against the bottom of the corresponding circular groove 16, and each of the protrusions 32 would be ensured to tightly fit into the corresponding recess 161. In the current embodiment, each of the rings 40 tightly fits in the corresponding circular groove 16 of the caliper main body 10, whereby to constrain the location of the corresponding membrane 30. In this way, each of the membranes 30 would be firmly fixed on the caliper main body 10.

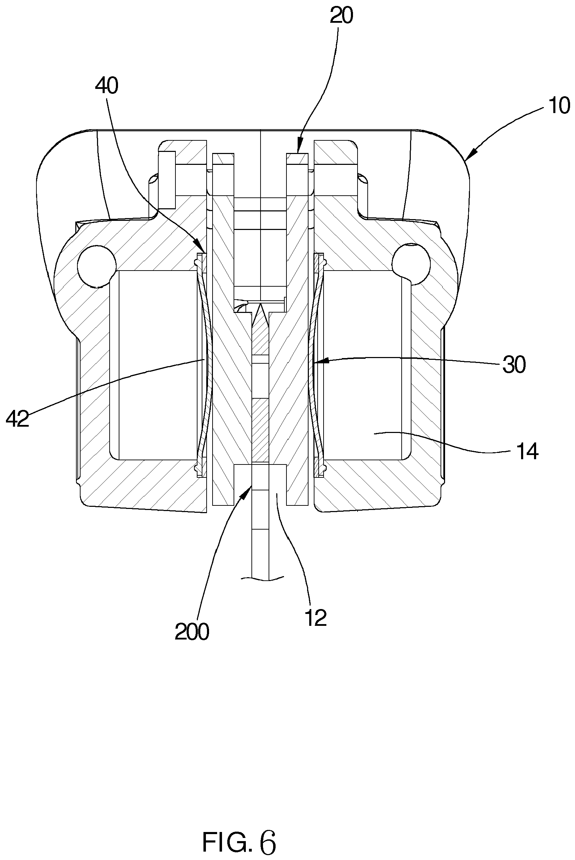

As shown in FIG. 6, with the aforementioned designs on the structure of the hydraulic disc brake device 100, once the rider pulls the lever in attempt to stop the bicycle, the hydraulic oil would be driven to flow toward each of the oil chambers 14, and then the hydraulic oil would push and deform the membranes 30; a part of each of the membranes 30 which passes through the hollow area 42 of the corresponding ring 40 would bulge and push against the corresponding brake lining 20. Therefore, the brake linings 20 would overcome the elasticity of the elastic members and move toward the brake disc 200. As a result, the brake linings 20 would approach toward each other and clamp the brake disc 200, whereby to stop the bicycle.

On the contrary, when the rider releases the lever, the brake linings 20 would be forced by the elastic member to move in a direction away from each other, i.e., toward the corresponding openings 141, and would no longer contact the brake disc 200. At this time, the hydraulic oil would flow back into the oil cylinders, and the membranes 30 would return to their original condition. After that, the brake disc 200 would be able to synchronously rotate along with the bicycle rim.

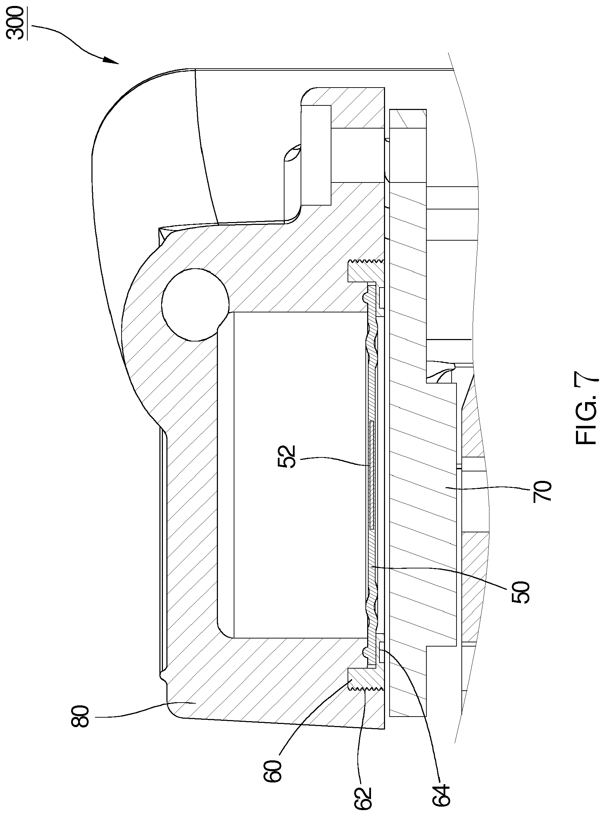

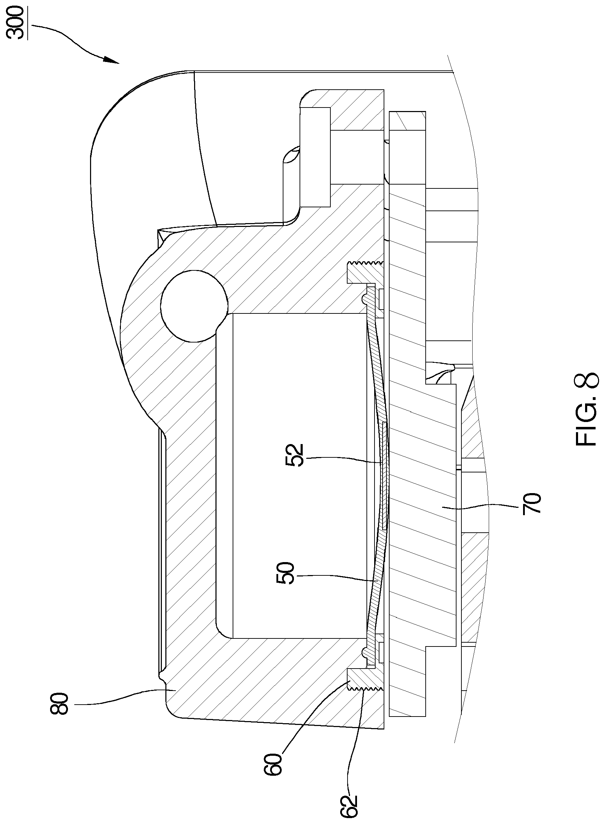

It needs to be further clarified that, though the membranes 30 are fixed through the rings 40 in the above embodiment, such structural design is not a limitation of the present invention. A hydraulic disc brake device 300 of a second embodiment of the present invention is illustrated in FIG. 7, which has basically the same structures with the hydraulic disc brake devi ce 100 of the fi rst embodiment. The difference between these two embodiments is that, each of membranes 50 in the second embodiment has an iron sheet 52 provided therein to enhance its durability. As shown in FIG. 8, each of the iron sheets 52 would steadily push against a corresponding brake lining 70 along with the movement of a part of the corresponding membrane 50. Said iron sheets 52 could be also applied in the membranes 30 of the first embodiment. In addition, another difference between the first and the second embodiments is that, each of the rings 60 is shaped like a shallow dish, and has a threaded segment 62 provided on an outer peripheral wall thereof. Furthermore, each of the rings 60 has two slots 64 provided on a surface thereof facing the correspondi ng brake lining 70.

By providing the slots 64, the rings 60 could be screwed to the caliper main body 80 with a hand tool (e.g., a wrench) during assembling, so that each of the rings 60 would tightly abut upon a periphery of the corresponding membrane 50 with another surface thereof, whereby to fix the membranes 50. It is worth mentioning that, in other embodiments, each of the rings could also have slots or protrusions of different shapes or even different numbers formed thereon to fit the use of other types of hand tools. In addition, there could be other ways to fix the membranes or the rings in other embodiments. For example, a bolt could be used to go through a ring and a membrane sequentially before being screwed into the caliper main body, which could also fix the membrane and the ring. It should be clarified that the methods of fixing the membranes and the rings mentioned above are not a limitation of the present invention.

In summary, the hydraulic disc brake device disclosed in the present invention uses the highly elastic and easily deformable membranes to push and move the brake linings, whereby to drive the brake linings to clamp or leave the brake disc. In this way, the conventional piston structure which costs more and is not easy to assemble could be replaced. The aforementioned design could not only reduce the space in the caliper main body required to accommodate large components, but also improve the efficiency of assembling and lower the manufacturing cost, without the potenti al problem of oil leakage.x

## Claims

1. A hydraulic disc brake device (100, 300), comprising:
a caliper main body (10) having a channel (12) and two oil chambers (14), each of which is formed on two sides of the channel (12), wherein each of the oil chambers (14) has an openi ng (141) faci ng the channel (12);
two brake linings (20) provided in the channel (12) of the caliper main body (10); and
two membranes (30, 50) assembled to the caliper main body (10), wherein each of the membranes (30, 50) is located near the opening (141) of one of the oil chambers (14), respectively, and seals the corresponding opening (141);
two rings (40, 60), each of which is engaged with the caliper main body (10), and pushes against a periphery of one of the membranes (30, 50), wherein each of the rings (40, 60) has a hollow area (42);
whereby, when hydraulic oil is injected into the oil chambers (14) of the caliper main body (10), the membranes (30, 50) are pushed by the hydraulic oil, and therefore a part of each of the membranes (30, 50) passes through the hollow area (42) of the corresponding ring (40, 60) and bulges outward to push against the corresponding brake linings (20), causing the brake linings (20) to approach each other.

2. The hydraulic disc brake device (100, 300) of claim 1, wherein the caliper main body (10) has two circular grooves (16), each of which is respectively provided on one of the two sides of the channel (12), and communicates with the corresponding oil chamber (14); each of the rings (40, 60) is respectively located in one of the circular grooves (16), tightly pushing the periphery of the corresponding membrane (30, 50) against a bottom of the corresponding circular groove (16).

3. The hydraulic disc brake device (100, 300) of claim 2, wherein each of the circular grooves (16) is further provided with a recess (161) on the bottom thereof; each of the membranes (30, 50) has a protrusion (32) provided on a surface thereof facing the oil chamber (14), each of the protrusions (32) tightly fits into the corresponding recess (161).

4. The hydraulic disc brake device (100, 300) of claim 1, wherein each of the membranes (30, 50) has a wavy segment (34); when the membranes (30, 50) are pushed by the hydraulic oil, each of the wavy segments (34) stretches toward the corresponding brake lining (20).

5. The hydraulic disc brake device (100, 300) of claim 2, wherein each of the membranes (30, 50) has a wavy segment (34); when the membranes (30, 50) are pushed by the hydraulic oil, each of the wavy segments (34) stretches toward the corresponding brake lining (20).

6. The hydraulic disc brake device (100, 300) of claim 3, wherein each of the membranes (30, 50) has a wavy segment (34); when the membranes (30, 50) are pushed by the hydraulic oil, each of the wavy segments (34) stretches toward the corresponding brake lining (20).

7. The hydraulic disc brake device (100, 300) of claim 1, wherein the membrane (30, 50) is made of one single material.

8. The hydraulic disc brake device (100, 300) of claim 1, wherein the membrane (30, 50) are made of composite materials.

9. The hydraulic disc brake device (300) of claim 1, wherein each of the membranes (50) has an iron sheet (52) provided therein; each of the iron sheets (52) moves toward the corresponding brake lining (20) along with the part of the corresponding membrane (50) when said membrane (50) is pushed by the hydraulic oil.

10. The hydraulic disc brake device (300) of claim 1, wherein each of the rings (60) has a threaded segment (62) provided thereon; each of the rings (60) is screwed with the caliper main body (10) through the threaded segment (62).

11. The hydraulic disc brake device (300) of claim 11, wherein each of the rings (60) has a surface facing the corresponding brake lining (20), and each of the rings (60) has at least two slots (64) recessed i nto the surface.
